# EUROPÄISCHE PATENTSCHRIFT

(11) **EP 0 945 296 B1**
(45) Veröffentlichungstag und Bekanntmachung des Hinweises auf die Patenterteilung: **05.11.2003**
(21) Anmeldenummer: 98124561.6
(22) Anmeldetag: 22.12.1998
(51) Int. Cl.: B60J 10/02

(54) **Zierleistenbefestigung in Scheibenrandumkapselung**
Trim fastening for covering the edge of a glass panel
Fixation pour enjoliveur destiné à habiller le bord d'un panneau en verre

(30) Priorität: 23.03.1998 DE 19812707; 01.07.1998 DE 19829456
(43) Veröffentlichungstag der Anmeldung: 29.09.1999
(73) Patentinhaber: Schade GmbH & Co. KG, 58840 Plettenberg (DE)
(72) Erfinder: Bittner, Norfried, 58452 Witten (DE)
(74) Vertreter: Gossel, Hans K., Dipl.-Ing.

(56) Entgegenhaltungen:
- DE-A- 3 518 145
- DE-A- 4 026 205
- DE-A- 4 141 813
- DE-A- 4 424 803
- DE-A- 4 427 464
- FR-A- 2 565 621
- US-A- 4 950 019

## Beschreibung

Die Erfindung betrifft ein Kraftfahrzeugfenster, bestehend aus einer in eine stufenförmige Ausnehmung des umlaufenden Randes der Fensteraussparung eingesetzten und mit einer Einfassung aus Kunststoff versehenen Scheibe, die mit einer zu der Scheibe im wesentlichen parallelen Seite der Ausnehmung verklebt ist.

Fensteraussparungen von Kraftfahrzeugkarosserien sind üblicherweise an ihrem umlaufenden Rand mit einer stufenförmigen Ausnehmung versehen, deren beiden Seiten durch winkelig zueinander stehende Flanken gebildet sind. In diese stufenförmige Ausnehmung muß die Scheibe eingesetzt und befestigt werden, und zwar in einer Weise, daß der aufgrund von Herstellungstoleranzen unterschiedlich breite Spalt zwischen der Scheibe und der Ausnehmung ausgeglichen wird, daß der Spalt in einer ein ansprechendes Aussehen vermittelnden Weise überdeckt wird und ein Eindringen von Wasser und Schmutz in den Spalt vermieden wird, um Korrosion zu vermeiden, und daß Wasser geordnet von der Scheibe ablaufen kann. Weiterhin ist es eine Forderung einer wirtschaftlichen Bauweise und Montage, daß die Scheibe zum Verhindern von Transportschäden mit einem Kantenschutz versehen ist und daß die Lagerhaltung von der Scheibenbefestigung dienenden Teilen möglichst gering ist.

Bei bekannten Kraftfahrzeugfenstern der eingangs angegebenen Art wird der Spalt zwischen der mit einer Einfassung versehenen Scheibe und der etwa rechtwinkelig zu dieser verlaufenden Flanke der Ausnehmung der Fensteraussparung durch eine Zierleiste geschlossen, die von einem Halteteil gehalten ist, das durch besondere Befestigungsmittel, beispielsweise Bolzen, Nieten oder angeformte Vorsprünge, mit der Ausnehmung verbunden ist. Eine derartige Befestigung erfordert mehrere Einzelteile, wobei insbesondere Befestigungseinrichtungen vorgesehen werden müssen, um die Zierleiste zu befestigen.

Bei einem aus DE 195 39 960 A1 bekannten Kraftfahrzeugfenster der eingangs angegebenen Art ist die Fenstereinfassung mit besonderen angespritzten Zapfen versehen, die in Bohrungen der zu der Scheibe parallelen Seite der Ausnehmung verankert werden, oder die Einfassung ist mit einem Schlitz versehen, in den der innere Rand der Fensteraussparung greift.

Aus der FR-A-2 565 621 ist ein Kraftfahrzeugfenster bekannt, das aus einer Scheibe besteht, die in eine stufenförmige Ausnehmung des umlaufenden Randes der Fensteraussparung eingesetzt ist und die mit einer Einfassung aus Kunststoff versehen ist. Die Scheibe ist mit einer zu der Scheibe im wesentlichen parallelen Seite der Ausnehmung verklebt. Die Einfassung besteht aus einem mindestens die schmale Stirnseite und den Randbereich der Innenseite der Scheibe einfassenden Profil, das mit einer Nut versehen ist, deren eine Flanke mit einem Hinterschnitt versehen ist. In der Nut ist der verdickte Rand eines Haltestegs einer Zierleiste verrastet, die den Bereich zwischen der Scheibe und der Fensteraussparung überdeckt und die eine Dichtlippe aufweist, die auf dem Rand der Fensteraussparung aufliegt.

Aus der DE-A-4 141 813 ist ein Kraftfahrzeugfenster bekannt, das aus einer Scheibe besteht, die in eine stufenförmige Ausnehmung des umlaufenden Randes der Fensteraussparung eingesetzt ist und die mit einer Einfassung aus Kunststoff versehen ist. Die Scheibe ist mit einer zu der Scheibe im wesentlichen parallelen Seite der Ausnehmung verklebt. Die Einfassung besteht aus einem mindestens die schmale Stirnseite und den Randbereich der Innenseite der Scheibe einfassenden Profil, das mit einem Haltesteg versehen ist, an dem eine Zierleiste befestigt ist.

Aufgabe der Erfindung ist es, eine mit einer Einfassung versehene Scheibe zu schaffen, die sich einfach in einer Ausnehmung des umlaufenden Randes einer Fensteraussparung in der Weise befestigen läßt, daß der Spalt zwischen der Scheibe und der Ausnehmung unter Ausgleich von Fertigungstoleranzen geschlossen ist und sich der Spalt in einfacher und ansprechender Weise durch eine Zierleiste überdecken läßt.

Erfindungsgemäß wird diese Aufgabe durch die Merkmale des Anspruchs 1 gelöst. Die Einfassung besteht aus einem mindestens die schmale Stirnseite und den Randbereich der Innenseite der Scheibe einfassenden Profil, an das eine Dichtlippe, die an der anderen Seite der Ausnehmung anliegt, angeformt ist. Das Profil ist im Bereich zwischen der Dichtlippe und der schmalen Stirnseite der Scheibe mit einer Nut versehen, deren Flanken mit hakenförmigen Hinterschnitten versehen sind. In der Nut ist der verdickte Rand eines Haltestegs einer Zierleiste verrastet, die den Bereich zwischen der Dichtlippe und der Scheibe überdeckt. Die als besonderes Teil vorgesehene Zierleiste verleiht dem Übergangsbereich zwischen Fensteraussparung und Scheibe ein ansehnliches Aussehen. Die Zierleiste läßt sich einfach und schnell nur durch Eindrücken des Haltestegs in die Haltenut montieren. Die Zierleiste kann aus einem Strangpreßprofil aus Kunststoff oder Aluminium oder aber auch aus einem Stahl-Walz-Profil bestehen.

In der einfachsten Ausgestaltung der Erfindung bildet die Einfassung eine Umkapselung des Scheibenrandes, die zugleich auch den Spalt zwischen der Scheibe und der Ausnehmung der Fensteraussparung schließt. Die Umkapselung kann unter Verwendung eines Haftvermittlers an den Scheibenrand angespritzt werden oder sie kann als Strangpreßprofil hergestellt und mit dem Scheibenrand verbunden werden. Auf diese Weise ist die mit der Randumkapselung versehene Scheibe beim Transport gegen Beschädigungen geschützt und die Lagerhaltung der für die Kraftfahrzeugfenster benötigten Teile ist auf ein Minimum reduziert. Die Scheibe wird nur durch eine aus einer umlaufenden Kleberaupe bestehenden Verklebung in der Ausnehmung der Fensteraussparung gehalten, so daß zusätzliche Befestigungselemente wie Bolzen, Niete oder Klipse entfallen. Ein Ausgleich der aufgrund der Herstellungstoleranzen unterschiedlichen Breite des Spalts zwischen der Scheibe und der Ausnehmung der Fensteraussparung erfolgt durch die Randumkapselung bzw. die Dichtlippe selbst.

Zweckmäßigerweise ist die Dichtlippe materialhomogen mit dem die Randumkapselung bildenden Profil verbunden.

Weiterhin kann das Profil einen den Randbereich der Außenseite der Scheibe übergreifenden Steg aufweisen, so daß das Profil gleichsam eine U-förmige Randeinfassung der Scheibe bildet. Der übergreifende Steg kann wulstartig ausgebildet sein. Nach einer besonders bevorzugten Ausführungsform ist vorgesehen, daß der innere Teil der Zierleiste den den Randbereich der Scheibe einfassenden Steg unter Bildung einer wasserabweisenden Kante überragt. Diese Ausgestaltung ist insbesondere dann vorteilhaft, wenn es sich bei der Scheibe um die Frontscheibe eines Kraftfahrzeugs handelt, so daß der von dem Scheibenwischer erzeugte Wasserschwall gut beherrscht und in geordneter Weise abgeleitet werden kann. Die das Wasser abweisende Kante braucht nicht umlaufend ausgebildet zu sein. Es genügt, wenn diese nur an den Seiten der Frontscheibe vorgesehen ist.

Zweckmäßigerweise besteht der innere, den inneren Randbereich der Scheibe einfassende Schenkel des Profils aus einem äußeren verdickten und einem inneren flachen Abschnitt. Der äußere verdickte Abschnitt bildet eine gute Auflage des die Randumkapselung bildenden Profils an der inneren Seite oder Flanke der Ausnehmung der Fensteraussparung. Zur Befestigung der Scheibe in der Ausnehmung der Fensteraussparung kann eine den flachen Abschnitt des inneren Schenkels des Profils mit der inneren Flanke der Ausnehmung verbindende Kleberaupe vorgesehen sein. Die Kleberaupe kann auch angrenzend an den den inneren Randbereich der Scheibe einfassenden Schenkel des Profils angeordnet sein, so daß sie die Scheibe unmittelbar mit der inneren Flanke der Ausnehmung verbindet.

Nach einer weiteren bevorzugten Ausführungsform der Erfindung ist vorgesehen, daß der den äußeren Randbereich der Scheibe übergreifende Steg des Profils zu einer von der Scheibe abstehenden, wasserabweisenden Lippe geformt ist. Auch diese Lippe braucht nur an den seitlichen Bereichen der Frontscheibe vorgesehen zu werden. Bei dieser Ausgestaltung ist darauf verzichtet worden, die die wasserabweisende Lippe durch ein besonderes Teil zu bilden.

In die Nut zwischen der Dichtlippe und der wasserabweisenden Lippe kann wiederum der Haltesteg einer Zierleiste eingesetzt sein, die den Bereich zwischen beiden abdeckt.

Nach einer weiteren bevorzugten Ausführungsform ist vorgesehen, daß zwischen dem inneren Abschnitt der Zierleiste und der Scheibe ein winkeliges Profil eingelegt ist, dessen äußerer Schenkel der Halterung dient und dessen innerer Schenkel eine aufragende, wasserabweisende Lippe bildet. Dieses winkelige Profil braucht wiederum nur an den Seitenbereichen der Frontscheibe an der Zierleiste befestigt zu werden.

Nach einer weiteren Ausführungsform wird die der Erfindung zugrundeliegende Aufgabe durch die Mermale des Anspruchs 12 gelöst. Die Einfassung besteht aus einem mindestens die schmale Stirnseite und den Randbereich der Innenseite der Scheibe einfassenden Profil, das mit einem nach außen weisenden Haltesteg versehen ist, an dem eine Zierleiste befestigt ist. Die Zierleiste überdeckt und schließt sodann den Spalt zwischen der Scheibe bzw. dem die Randumkapselung bildenden Profil und der Ausnehmung der Fensteraussparung. Die Zierleiste ist an ihrem inneren Randbereich mit einer flexiblen Dichtlippe versehen, die einen Wasserabweiser bildet.

Die Zierleiste kann das die Scheibe einfassende Profil übergreifen, so daß dieses sichtbar überhaupt nicht in Erscheinung tritt. Die Zierleiste kann aus einem Strangpreßprofil oder aber auch aus einem Metallprofil bestehen. Dabei kann die Zierleiste als koextrudiertes Teil hergestellt werden, wobei die Zierleiste selbst aus einem härteren Kunststoff, beispielsweise Hart-PVC, und die flexible Dichtlippe aus einem weicheren Kunststoff, beispielsweise Weich-PVC, besteht.

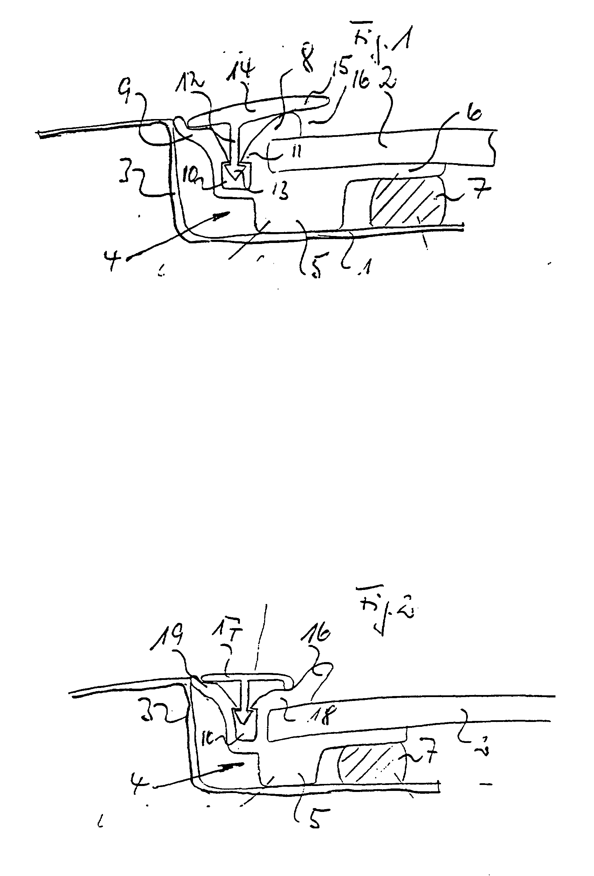

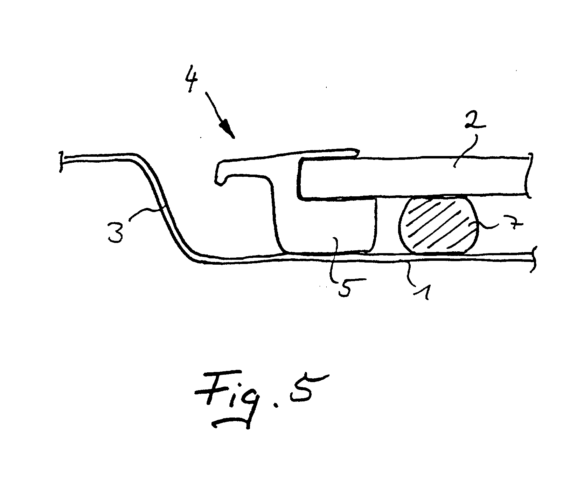

In den Fig. 1 bis 4 der Zeichnung sind 4 Ausführungsbeispiele der Erfindung in Form von Querschnitten durch die Ausnehmungen umlaufender Ränder der Fensteraussparungen mit in diesen befestigten Scheiben gezeigt. Fig. 5 zeigt eine andere Möglichkeit zur Verklebung der Scheibe, die auf die Ausführungsbeispiele gemäß den Fig. 1 bis 4 anwendbar ist.

Aus der Zeichnung ist die stufenförmige Ausnehmung des umlaufenden Randes der Fensteraussparung einer Kraftfahrzeugkarosserie ersichtlich, die aus einer inneren Flanke oder Seite 1, die etwa parallel zu der Scheibe 2 verläuft, und einer zu dieser etwa rechtwinkelig stehenden Flanke oder Seite 3 besteht.

Die Scheibe 1 ist mit einer Umkapselung bildenden umlaufenden Einfassung 4 versehen, die durch Umspritzung der Scheibe mit einem Kunststoff, beispielsweise PU, gebildet sein kann oder aus einem Strangpreßprofil besteht, das um die Scheibe herumgelegt und mit dieser verbunden ist. Die aus Fig. 1 ersichtliche Umkapselung 4 besteht aus einem die Scheibe 2 U-förmig einfassenden Profil, wobei der untere Profilschenkel aus einem äußeren verdickten Abschnitt 5 besteht, an den über eine Stufe ein innerer dünnerer Abschnitt 6 anschließt. In der Stufe zwischen den beiden Abschnitten 5, 6 ist eine Kleberaupe 7 angebracht, die aus einem geeigneten Kleber besteht und den Profilschenkel 6 mit der Seite 1 der Ausnehmung fest verbindet.

Der den oberen Randbereich der Scheibe 6 übergreifende Schenkel 8 des Profils ist in der dargestellten Weise wulstförmig ausgebildet.

An die Außenseite der Umkapselung 4 ist eine nach außen weisende Dichtlippe 9 angeformt, die dichtend an dem oberen Randbereich der äußeren Flanke 3 der Ausnehmung anliegt. Zwischen dem Schenkel 8 und der Dichtlippe 9 ist in dem die Umkapselung 4 bildenden Profil eine Nut 10 gebildet, die an ihren Flanken hakenartige Hinterschnitte 11 aufweist. In der Nut 10 ist ein Haltesteg 12 einer Zierleiste verrastet, die an ihrem äußeren Rand eine im Querschnitt pfeilförmige Verdickung 13 trägt, deren hakenförmigen Teile die hakenförmigen Teile 11 der Flanken der Nut 10 hintergreifen. Die mit dem Haltesteg 12 verbundene Zierleiste 14 überdeckt den Spalt zwischen dem Schenkel 8 und der Dichtlippe 9 und überragt mit ihrem inneren Ende 15 den wulstartigen Schenkel 8 der Umkapselung, so daß eine wasserabweisende Rinne 16 gebildet ist.

Die Zierleiste 12 bis 14 kann aus einem Strangpreßprofil aus Kunststoff oder Aluminium oder aber auch aus einem Walzprofil aus rostfreiem oder verchromten Stahl bestehen.

Die aus Fig. 1 ersichtliche Umkapselung 4 vereinigt mehrere Funktionen in sich. Sie dient einmal der Befestigung der in dieser gehalterten Scheibe 2, so daß keine zusätzlichen Befestigungselemente beispielsweise in Form von T-förmigen Bolzen oder Klipsen benötigt werden. Toleranzen des Spalts zwischen der Scheibe 6 und der Ausnehmung 1, 3 werden in der dargestellten Weise durch die Umkapselung 4 ausgeglichen. Weiterhin dient die Umkapselung der Halterung der Abdeck- oder Zierleiste 14.

Schließlich bildet die Zierleiste zusammen mit dem oberen Schenkel 8 der Umkapselung eine das Wasser abweisende Rinne.

Die aus Fig. 1 ersichtlicher Ausführungsform kann an dem Übergang der A-Säule und der Frontscheibe der Fahrzeugkarosserie angeordnet sein. Entsprechende Ausgestaltungen können aber auch für die Heck- und/Seitenscheiben vorgesehen sein.

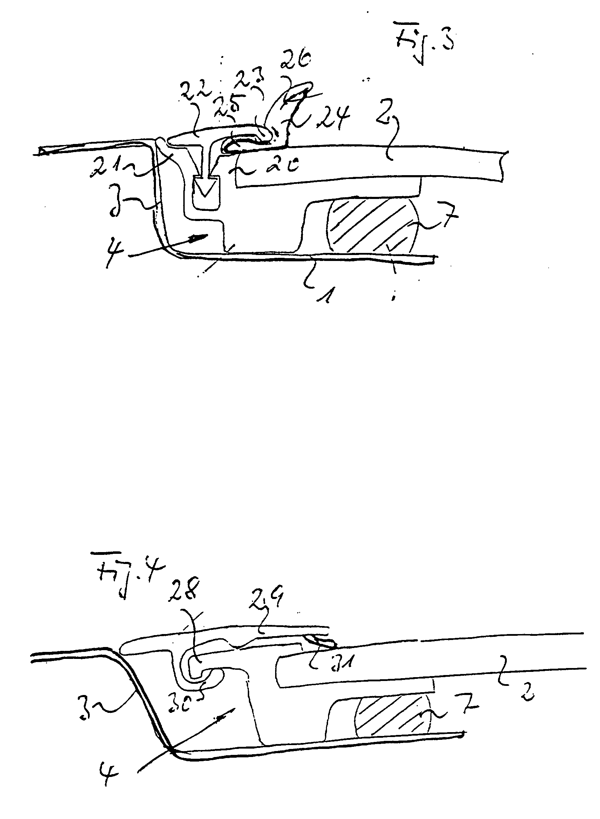

Das Ausführungsbeispiel gemäß Fig. 2 unterscheidet sich von dem nach Fig. 1 dadurch, daß der den oberen Randbereich der Scheibe 2 übergreifende Schenkel des die Umkapselung bildenden Profils eine von der Scheibe 2 abstehende Lippe 16 aufweist, die mit der Glasscheibe 2 eine wasser- und insbesondere schwallwasserabweisende Lippe bildet.

Bei dem Ausführungsbeispiel nach Fig. 2 ist die Zierleiste 17 entsprechend schmaler ausgebildet und überdeckt nur den Spalt zwischen dem oberen Schenkel 18 und der angeformten Dichtlippe 19, die an der Flanke 3 der Ausnehmung anliegt.

Bei dem Ausführungsbeispiel nach Fig. 3 ist die Scheibe 2 von einem winkeligen Teil des die Umkapselung 4 bildenden Profils eingefaßt. Der die schmale Stirnseite der Glasscheibe einfassende Steg 20 des Profils schließt an seiner Oberseite im wesentlichen bündig mit der Oberseite der Scheibe 2 ab. An das Profil ist wiederum eine äußere Dichtlippe 21 angeformt, die dichtend an der Flanke 3 der Ausnehmung anliegt. Das die Umkapselung 4 bildende Profil weist wiederum zwischen dem Steg 20 und der Dichtlippe 21 eine Nut mit durch Hinterschnitten gebildeten Rastkanten 11 auf, in der der Haltesteg 12 einer Zierleiste 22 verrastet ist. Die Zierleiste 22 übergreift mit ihrem inneren an ihrem Ende leicht gekrümmten Rand die Scheibe 2, wobei zwischen dem inneren Rand 23 und der Scheibe ein winkeliges Profil 24 eingelegt ist, dessen äußerer Schenkel 25 zur Halterung von dem inneren Abschnitt der Zierleiste 23 übergriffen ist und dessen innerer Schenkel 26 mit der Glasscheibe 2 eine wasserabweisende Rinne bildet. Da von den Scheibenwischern erzeugtes Schwallwasser insbesondere nur an den Seitenbereichen der Frontscheibe abzuleiten ist, braucht das Profil 24 nur an den Seitenbereichen einer Frontscheibe angeordnet zu werden.

Das Profil 24 kann als Strangprofil gefertigt sein. Es kann selbstverständlich auch umlaufend angeordnet werden.

Die Zierleisten können einteilig und umlaufend ausgebildet sein. Sie kann auch über den Dachkanal von der Frontscheibe zu der Heckscheibe geführt sein. Weiterhin kann sie mehrteilig ausgebildet sein und zwar unterschiedliche Querschnitte im Bereich des Dachkanals und der Scheiben aufweisen.

Bei dem Ausführungsbeispiel nach Fig. 4 weist die die Scheibe 2 halternde und einfassende Umkapselung 4 einen nach außen weisenden Steg 28 auf. Auf diesen Steg 28 ist eine Zierleiste 29 aufgesetzt, die den oberen Teil der Umkapselung 4 und den Spalt zwischen der Umkapselung und der äußeren Flanke 3 der Ausnehmung überdeckt. Zur Halterung an dem Schenkel 28 der Umkapselung ist die Zierleiste mit einem gekrümmten Schenkel 30 versehen.

An ihrem inneren unteren Endbereich kann die Zierleiste 29 mit einer Dichtlippe 31 versehen sein, die wiederum eine wasserabweisende Rinne begrenzt.

Die Zierleiste 29 kann aus einem Strangpreßprofil aus Kunststoff und auch aus einem koextrudiertes Profil bestehen, wobei die Dichtlippe 31 durch einen weicheren Kunststoff gebildet ist.

Die Zierleiste 29 kann auch aus Metall bestehen, wobei die Dichtlippe 31 aus Kunststoff besteht und mit der Zierleiste verbunden ist.

Fig. 5 zeigt eine weitere Möglichkeit zur Verklebung der Scheibe 2 gegenüber der Ausnehmung 3. Zur Darstellung wurde das Ausführungsbeispiel gemäß Fig. 4 herangezogen, allerdings ist die alternative Verklebemöglichkeit auch auf die übrigen Ausführungsbeispiele gemäß den Fig. 1, 2 oder 3 anwendbar. Das Profil 4 ist in diesem Fall ohne den inneren dünneren Abschnitt 6 ausgebildet, so daß durch die Kleberaupe 7 die Scheibe 2 direkt mit der Seite 1 der Ausnehmung verklebt ist. Der verdickte Abschnitt 5 des Profils 4 dient dabei zum einen als Tiefenanschlag der Scheibe 2 gegenüber der Seite 1 der Ausnehmung und zum anderen als Begrenzung gegenüber der Kleberaupe 7. Hierdurch wird der Austritt des Klebers über den Scheibenrand verhindert. Auf diese Weise kann eine noch sicherere Verklebung der Scheibe erreicht werden.

## Patentansprüche

1. Kraftfahrzeugfenster, bestehend aus einer in eine stufenförmige Ausnehmung (1, 3) des umlaufenden Randes der Fensteraussparung eingesetzten und mit einer Einfassung (4) aus Kunststoff versehenen Scheibe (2), die mit einer zu der Scheibe im wesentlichen parallelen Seite (1) der Ausnehmung verklebt ist, wobei die Einfassung (4) aus einem mindestens die schmale Stirnseite und den Randbereich der Innenseite der Scheibe (2) einfassenden Profil besteht, an das eine Dichtlippe (9), die an der anderen Seite (3) der Ausnehmung anliegt, angeformt ist, wobei das Profil (4) im Bereich zwischen der Dichtlippe (9) und der schmalen Stirnseite der Scheibe (2) mit einer Nut (10) versehen ist, deren Flanken mit hakenförmigen Hinterschnitten (11) versehen sind, und wobei in der Nut (10) der verdickte Rand (13) eines Haltestegs (12) einer Zierleiste (14) verrastet ist, die den Bereich zwischen der Dichtlippe (9) und der Scheibe (2) überdeckt.

2. Kraftfahrzeugfenster nach Anspruch 1, **dadurch gekennzeichnet, daß** die Dichtlippe (9) materialhomogen mit dem Profil (4) verbunden ist.

3. Kraftfahrzeugfenster nach Anspruch 1 oder 2, **dadurch gekennzeichnet, daß** das Profil (4) einen den Randbereich der Außenseite der Scheibe (2) übergreifenden Steg (8) aufweist.

4. Kraftfahrzeugfenster nach Anspruch 3, **dadurch gekennzeichnet, daß** der Steg (8) wulstartig ausgebildet ist.

5. Kraftfahrzeugfenster nach einem der Ansprüche 1 bis 4, **dadurch gekennzeichnet, daß** der innere Teil der Zierleiste (14) den den Randbereich der Scheibe (2) einfassenden Steg (8) unter Bildung einer wasserabweisenden Rinne (16) überragt.

6. Kraftfahrzeugfenster nach einem der Ansprüche 1 bis 5, **dadurch gekennzeichnet, daß** der innere, den inneren Randbereich der Scheibe einfassende Schenkel des Profils (4) aus einem äußeren verdickten (5) und einem inneren flachen Abschnitt (6) besteht.

7. Kraftfahrzeugfenster nach einem der Ansprüche 1 bis 6, **dadurch gekennzeichnet, daß** die Verklebung aus einer den flachen Abschnitt (6) mit der inneren Flanke (1) der Fensteraussparung verbindenden Kleberaupe (7) besteht.

8. Kraftfahrzeugfenster nach einem der Ansprüche 1 bis 7, **dadurch gekennzeichnet, daß** die Kleberaupe angrenzend an den den inneren Randbereich der Scheibe einfassenden Schenkel des Profils die Scheibe unmittelbar mit der inneren Flanke der Ausnehmung verbindet.

9. Kraftfahrzeugfenster nach Anspruch 3 oder 4, **dadurch gekennzeichnet, daß** der den äußeren Randbereich der Scheibe übergreifende Steg (18) des Profils (4) zu einer von der Scheibe (2) abstehenden, wasserabweisenden Lippe (16) geformt ist.

10. Kraftfahrzeugfenster nach Anspruch 9, **dadurch gekennzeichnet, daß** in die Nut (10) zwischen der Dichtlippe (19) und der wasserabweisenden Lippe (16) der Haltesteg einer Zierleiste (17) eingesetzt ist, die den Bereich zwischen beiden abdeckt.

11. Kraftfahrzeugfenster nach einem der Ansprüche 1 bis 10, **dadurch gekennzeichnet, daß** zwischen dem inneren Abschnitt (23) der Zierleiste (22) und der Scheibe (2) ein winkeliges Profil (24) eingelegt ist, dessen äußerer Schenkel (25) der Halterung dient und dessen innerer Schenkel (26) eine aufragende, wasserabweisende Lippe bildet.

12. Kraftfahrzeugfenster, bestehend aus einer in eine stufenförmige Ausnehmung (1, 3) des umlaufenden Randes der Fensteraussparung eingesetzten und mit einer Einfassung (4) aus Kunststoff versehenen Scheibe (2), die mit einer zu der Scheibe im wesentlichen parallelen Seite (1) der Ausnehmung verklebt ist, wobei die Einfassung (4) aus einem mindestens die schmale Stirnseite und den Randbereich der Innenseite der Scheibe (2) einfassenden Profil besteht, das mit einem nach außen weisenden Haltesteg (28) versehen ist, an dem eine Zierleiste (29) befestigt ist, wobei die Zierleiste (29) an ihrem inneren Randbereich mit einer flexiblen Dichtlippe (31) versehen ist, die einen Wasserabweiser bildet.

13. Kraftfahrzeugfenster nach Anspruch 12, **dadurch gekennzeichnet, daß** die Zierleiste (29) den Spalt zwischen dem:die Scheibe (2) einfassenden Profil (4) und der äußeren Seiten (3) der Ausnehmung überdeckt.

14. Kraftfahrzeugfenster nach Anspruch 12 oder 13, **dadurch gekennzeichnet, daß** die Zierleiste (29) das die Scheibe einfassende Profil (4) übergreift.

## Claims

1. Motor vehicle window, comprising a glass panel (2) which is inserted into a step-shaped recess (1, 3) of the encircling edge of the window cut-out and is provided with a frame (4) made from plastic and is bonded to a side (1) of the recess which is essentially parallel to the glass panel, the frame (4) comprising at least one profile which surrounds at least the narrow end side and the edge region of the inner side of the glass panel (2) and on which a sealing lip (9), which bears against the other side (3) of the recess, is integrally formed, the profile (4) being provided with a groove (10) in the region between the sealing lip (9) and the narrow end side of the glass panel (2), the flanks of which groove are provided with hook-shaped undercuts (11), and the thickened edge (13) of a retaining web (12) of a trim strip (14) being latched in the groove (10), the said trim strip covering the region between the sealing lip (9) and the glass panel (2).

2. Motor vehicle window according to Claim 1, **characterized in that** the sealing lip (9) is connected homogeneously in terms of material to the profile (4).

3. Motor vehicle window according to claim 1 or 2, **characterized in that** the profile (4) has a web (8) engaging over the edge region of the outer side of the glass panel (2).

4. Motor vehicle window according to claim 3, **characterized in that** the web (8) is of bead-like design.

5. Motor vehicle window according to one of claims 1 to 4, **characterized in that** the inner part of the trim strip (14) protrudes over the edge region of the web (8) surrounding the window (2), forming a water-deflecting channel (16).

6. Motor vehicle window according to one of claims 1 to 5, **characterized in that** the inner limb of the profile (4) which surrounds the inner edge region of the glass panel consists of an outer, thickened section (5) and an inner, flat section (6).

7. Motor vehicle window according to one of claims 1 to 6, **characterized in that** the adhesive bond consists of an adhesive bead (7) which connects the flat section (6) to the inner flank (1) of the window cut-out.

8. Motor vehicle window according to one of claims 1 to 7, **characterized in that** the adhesive bead connects the glass panel directly to the inner flank of the recess adjacent to the limb of the profile which surrounds the inner edge region of the glass panel.

9. Motor vehicle window according to claim 3 or 4, **characterized in that** the web (18) of the profile (4) which engages over the outer edge region of the glass panel is shaped to form a water-deflecting lip (16) which protrudes from the glass panel (2).

10. Motor vehicle window according to claim 9, **characterized in that** the retaining web of a trim strip (17) is inserted into the groove (10) between the sealing lip (19) and the water-deflecting lip (16), the said trim strip covering the region between the two.

11. Motor vehicle window according to one of claims 1 to 10, **characterized in that** an angled profile (24) is placed between the inner section (23) of the trim strip (22) and the glass panel (2), the outer limb (25) of which profile is used for securing purposes and the inner limb (26) of which profile forms a protruding, water-deflecting lip.

12. Motor vehicle window, comprising a glass panel (2) which is inserted into a step-shaped recess (1, 3) of the encircling edge of the window cut-out and is provided with a frame (4) made from plastic and is bonded to a side (1) of the recess which is essentially parallel to the glass panel, the frame (4) consisting of at least one profile which surrounds the narrow end side and the edge region of the inner side of the glass panel (2) and is provided with an outwardly pointing retaining web (28) to which a trim strip (29) is fastened, the trim strip (29) being provided in its inner edge region with a flexible sealing lip (31) which forms a water deflector.

13. Motor vehicle window according to Claim 12, **characterized in that** the trim strip (29) covers the gap between the profile (4) which surrounds the glass panel (2) and the outer sides (3) of the recess.

14. Motor vehicle window according to Claim 12 or 13, **characterized in that** the trim strip (29) engages over the profile (4) which surrounds the glass panel.

## Revendications

1. Fenêtre de véhicule automobile consistant en une vitre (2) insérée dans une échancrure à gradin (1, 3) du bord faisant le pourtour de l'ouverture de la fenêtre et pourvue d'un encadrement (4) en plastique qui est collé à un côté (1) de l'échancrure substantiellement parallèle à la vitre, l'encadrement (4) consistant en un profilé sertissant au moins la face frontale étroite et la zone de bord de la face intérieure de la vitre (2), profilé sur lequel une lèvre d'étanchéité (9) qui repose contre l'autre côté (3) de l'échancrure est formée, le profilé (4) étant pourvu dans la zone entre la lèvre d'étanchéité (9) et la face frontale étroite de la vitre (2) d'une rainure (10) dont les flancs sont pourvus de contre-dépouilles (11) en forme de crochet, et dans la rainure (10) étant encliqueté le bord épaissi (13) d'une baguette de fixation (12) d'un enjoliveur (14) qui recouvre la zone entre la lèvre d'étanchéité (9) et la vitre (2).

2. Fenêtre de véhicule automobile selon la revendication 1, **caractérisée en ce que** la lèvre d'étanchéité (9) est reliée au profilé (4) par homogénéité de matériau.

3. Fenêtre de véhicule automobile selon les revendications 1 ou 2, **caractérisée en ce que** le profilé (4) présente une baguette (8) qui recouvre partiellement la zone de bord du côté extérieur de la vitre (2).

4. Fenêtre de véhicule automobile selon la revendication 3, **caractérisée en ce que** la baguette (8) est formée à la manière d'un bourrelet.

5. Fenêtre de véhicule automobile selon l'une quelconque des revendications 1 à 4, **caractérisée en ce que** la partie intérieure de l'enjoliveur (14) dépasse la baguette (8) sertissant la zone de bord de la vitre (2) en formant une rigole (16) hydrofuge.

6. Fenêtre de véhicule automobile selon l'une quelconque des revendications 1 à 5, **caractérisée en ce que** la branche intérieure du profilé (4) sertissant la zone de bord intérieure de la vitre consiste en une section extérieure épaissie (5) et une section intérieure plate (6).

7. Fenêtre de véhicule automobile selon l'une quelconque des revendications 1 à 6, **caractérisée en ce que** l'encollage consiste en un cordon de colle (7) raccordant la section plate (6) avec le flanc intérieur (1) de l'ouverture de la fenêtre.

8. Fenêtre de véhicule automobile selon l'une quelconque des revendications 1 à 7, **caractérisée en ce que** le cordon de colle (7) relie directement la vitre avec le flanc intérieur de l'échancrure dans le voisinage immédiat de la branche du profilé sertissant la zone de bord intérieure de la vitre.

9. Fenêtre de véhicule automobile selon la revendication 3 ou 4, **caractérisée en ce que** la baguette (18) du profilé (4) recouvrant partiellement la zone de bord extérieure de la vitre est formée en une lèvre hydrofuge (16) en projection par rapport à la vitre (2).

10. Fenêtre de véhicule automobile selon la revendication 9, **caractérisée en ce que** dans la rainure (10) entre la lèvre d'étanchéité (19) et la lèvre hydrofuge (16) est placée la baguette de fixation d'un enjoliveur (17) qui recouvre la zone entre les deux.

11. Fenêtre de véhicule automobile selon l'une quelconque des revendications 1 à 10, **caractérisée en ce qu'**entre la section intérieure (23) de l'enjoliveur (22) et la vitre (2) un profilé angulaire (24) est inséré dont la branche extérieure (25) sert à la fixation et dont la branche intérieure (26) forme une lèvre hydrofuge verticale.

12. Fenêtre de véhicule automobile, consistant en une vitre (2) insérée dans une échancrure à gradin (1, 3) du bord faisant le pourtour de l'ouverture de la fenêtre et pourvue d'un encadrement (4) en plastique qui est collé avec un côté (1) de l'échancrure substantiellement parallèle à la vitre, l'encadrement (4) consistant en un profilé sertissant au moins la face frontale étroite et la zone de bord de la face intérieure de la vitre (2), profilé qui est pourvu d'une baguette de fixation (28) dirigée vers l'extérieur à laquelle est fixé un enjoliveur (29), l'enjoliveur (29) étant pourvu dans sa zone de bord intérieure d'une lèvre d'étanchéité souple (31) qui forme un déflecteur d'eau.

13. Fenêtre de véhicule automobile selon la revendication 12, **caractérisée en ce que** l'enjoliveur (29) recouvre la fente entre le profilé (4) sertissant la vitre (2) et les côtés extérieurs (3) de l'échancrure.

14. Fenêtre de véhicule automobile selon les revendications 12 ou 13, **caractérisée en ce que** l'enjoliveur (29) recouvre partiellement le profilé (4) sertissant la vitre.
